## Europäisches Patentamt

## European Patent Office

## Office européen des brevets

(19)

(11) Veröffentlichungsnummer: **0 046 478**
**B1**

(12) **EUROPÄISCHE PATENTSCHRIFT**

(45) Veröffentlichungstag der Patentschrift:
10.10.84

(51) Int. Cl.³: **B 60 J 7/10**

(21) Anmeldenummer: 81100566.9

(22) Anmeldetag: 27.01.81

(54) Planenverschluss für Planen mit eingenieteten Blechringen (Ösen).

(30) Priorität: 27.08.80 DE 3032208

(43) Veröffentlichungstag der Anmeldung:
03.03.82 Patentblatt 82/9

(45) Bekanntmachung des Hinweises auf die Patenterteilung:
10.10.84 Patentblatt 84/41

(84) Benannte Vertragsstaaten:
AT BE CH DE FR GB IT LI NL

(56) Entgegenhaltungen:
DE - A - 2 722 179
DE - C - 738 041
DE - C - 868 394
DE - U - 1 616 505
US - A - 1 666 582

(73) Patentinhaber: Firma Franz Miederhoff, Hauptstrasse,
D-5768 Sundern-Endorf (DE)

(72) Erfinder: Than, Johannes, Mühlenweg 2,
D-5768 Sundern-Endorf (DE)

(74) Vertreter: Fritz, Herbert, Dipl.-Ing., Mühlenberg 74,
D-5760 Arnsberg 1 (DE)

**Beschreibung**

Die Erfindung bezieht sich auf einen Planenverschluß für Planen mit eingenieteten Blechringen (Ösen) mit nachfolgenden Merkmalen:

Der Verschluß hat ein Gehäuse, das an einer Bordwand anbringbar ist und für das Überhängen einer Öse bemessen ist. Vorne am Gehäuse ist in langgestreckter Ausbildung und lotrechter Anordnung ein Schließteil angebracht, das oben und unten am Gehäuse überstehende Kopfflächen (Sperrflächen), die das Abnehmen der Öse verhindern, bildet. Das Schließteil ist in eine Offenstellung beweglich, wo die untere Kopffläche im wesentlichen aufgehoben ist.

Verschlüsse dieser Art werden reihenweise an der Bordwand eines Lastkraftwagens oder eines Bootes, das mit einer Plane abgedeckt werden soll, befestigt. Von den Ösen, die jeweils am Rand der Plane angebracht sind, wird jeweils eine über das Gehäuse gelegt, wenn der Verschluß in der Offenstellung ist. Dann wird der Verschluß durch Betätigung des Schließteiles geschlossen, so daß die Öse gehalten bleibt. Diese Verschlüsse sind sowohl für kreisrunde als auch für ovale Ösen geeignet. Bei einem bekannten Verschluß dieser Art (DE-PS 868 394) ist ein in der Draufsicht kreisrundes, tassenförmiges Gehäuse vorgesehen mit einem langgestreckten Knebel als Schließteil. Der Knebel ist mit einem exzentrisch angeordneten Bolzen am Gehäuse angebracht. In der Schließstellung stehen die Endbereiche des Knebels oben und unten um das gleiche Maß gegenüber dem Gehäuse vor, so daß die Öse welche auf das Gehäuse aufgelegt ist, gehalten ist. Geöffnet wird der Verschluß durch Drehen des Knebels um 180°. Dabei entfällt unten am Gehäuse die vorstehende Kopffläche, weil beim Drehen ein kürzerer Arm des Knebels nach unten gelangt ist. Am Gehäuse sind seitliche Ausnehmungen zum Durchziehen eines Plombendrahtes als Zollverschluß vorgesehen.

Die Aufgabe der Erfindung besteht darin einen Planenverschluß der eingangs genannten Art so auszubilden, daß er in der Verschlußstellung durch Aufnahme eines Zollseiles gesichert werden kann und daß er sich nach dem Öffnen wieder selbsttätig in die Verschlußstellung zurückbewegt.

Diese Aufgabe wird durch einen Planenverschluß mit den Merkmalen des Hauptanspruches gelöst. Die Unteransprüche beziehen sich auf verschiedene konstruktive Ausführungsformen.

Bei einem solchen Planenverschluß werden die die Öse haltenden Sperrflächen über und unter dem Gehäuse jeweils durch Endbereiche eines Bügels gebildet. Die Öffnungsstellung des Bügels erhält man durch Hochschieben desselben entgegen dem Federdruck, wodurch die unten am Gehäuse vorstehende Sperrfläche im wesentlichen aufgehoben wird, so daß die Öse durch Überschwenken unten am Bügel abgenommen werden kann. Nach der Abnahme der Öse gelangt der Bügel durch die Federkraft wieder selbsttätig in die Verschlußstellung.

Das am Bügel gebildete Bogenstück, das gegenüber dem Gehäuse nach vorne vorsteht, dient zur Aufnahme eines Zollseils in der Verschlußstellung.

Nach einer speziellen Ausführungsform der Erfindung ist ein Bügel vorgesehen mit einem halbkreisförmigen Bogenstück, das sich vom oberen Bügelende bis zum unteren Bügelende erstreckt. Wenn der obere Bereich der Öse am Gehäuse angehängt ist, liegt der untere Bereich am unteren Sektor des Bogenstückes an. Wenn dort auf die Öse gedrückt wird, gleitet diese am Bogenstück entlang, wodurch der Bügel selbsttätig in die Offenstellung hochgeschoben wird. Nach dem Überlaufen schnappt der Bügel selbsttätig in die Verschlußstellung. Das halbkreisförmige Bogenstück ist auch zur Aufnahme dicker Zollseile geeignet.

Bei einer weiteren Ausführungsform der Erfindung ist ein kleineres Bogenstück vorgesehen, das sich lediglich über den unteren Bügelbereich erstreckt, jedoch ebenfalls zur Aufnahme von Zollseilen mit einer Dicke von 8 mm geeignet ist. Bei dieser Ausführungsform besteht die Möglichkeit den Bügel insgesamt aus einem Eisenband zu formen.

Ausführungsbeispiele der Erfindung werden im folgenden näher beschrieben unter Bezugnahme auf die Zeichnungen.

Fig. 1 zeigt ein Gehäuse eines Planenverschlusses nach einem ersten Ausführungsbeispiel in zwei Ansichten.

Fig. 2 stellt eine Seitenansicht eines dazugehörigen Bügels dar.

Fig. 3 ist ein lotrechter Schnitt durch den funktionsfähigen Planenverschluß in geschlossenem Zustand.

Fig. 4 stellt den gleichen Schnitt des Planenverschlusses in Offenstellung dar.

Fig. 5 ist ein Schnitt nach V-V von Fig. 3.

Fig. 6 ist eine Draufsicht auf ein Gehäuse eines Planenverschlusses nach der Erfindung nach einem weiteren Ausführungsbeispiel.

Fig. 7 zeigt eine Seitenansicht eines dazugehörigen Bügels in Verschlußstellung (Gehäuse gestrichelt).

Fig. 8 ist eine Draufsicht auf diesen Bügel.

Fig. 9 stellt den Bügel und das Gehäuse (gestrichelt) in der Offenstellung dar.

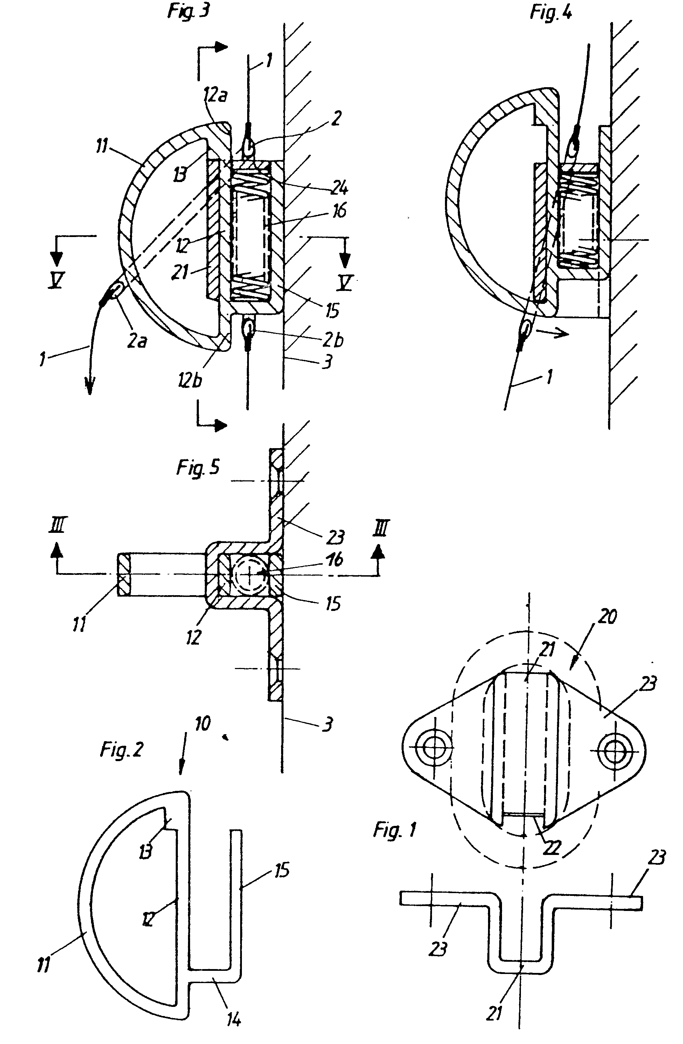

Die Einzelteile des Planenverschlusses nach Fig. 1 bis 5 sind ein Gehäuse 20, ein Bügel 10 und eine Schraubenfeder 16. Gehäuse und Bügel können aus Kunststoff oder aus Metall bestehen.

Am Gehäuse ist ein U-Profil 21 gebildet, das sich an jeder Seite in Gestalt eines Flansches 23 mit einer Öffnung zur Aufnahme einer Befestigungsschraube fortsetzt. An der mittleren (vorderen) Wand des U-Profiles 21 ist endseitig eine Ausnehmung 22 gebildet, die in der montierten Stellung unten ist. Das Gehäuse kann als Formteil aus Kunststoff oder Metall hergestellt sein, es kann aber auch ein geformtes Blechteil sein.

Ebenso kann der Bügel 10 (Fig. 2) aus Kunststoff oder aus Metall geformt sein. Er hat die Form eines geschlossenen Halbkreises mit Bogenstück 11 und Sehne 12. Im oberen Scheitelbereich ist ein Anschlag 13 gebildet. Parallel zur Sehne 12 ist ein Steg 15 gehalten, der über einen Quersteg 14 mit der Sehne verbunden ist. Der Quersteg 14 setzt im unteren Bereich an der Sehne an. Der Steg 15 endigt oben in Höhe des Anschlages 13. Der Bügel ist so breit wie der Innenraum des U-Profiles 21.

Bei der Montage wird ein Flansch 23 des Gehäuses durch den Bügel gesteckt bis Sehne 12 und Steg 15 vom U-Profil 21 aufgenommen werden. Die Ausnehmung 22 liegt dabei entgegengesetzt zum Anschlag 13. In den Raum, gebildet durch Sehne 12 und Steg 15, sowie durch die beiden Seitenwände des U-Profiles 21 wird von oben eine Schraubenfeder 16 eingesetzt. Der Raum wird oben durch ein Querstück 24 verschlossen, das zwischen die beiden Seitenwände des U-Profiles eingeklemmt wird. Wenn das Gehäuse aus Metall besteht dann kann das Querstück eine angeformte Lasche sein, die nach Einsatz der Feder umgebogen wird. Nach dem Einsatz des Querstückes 24 ist die Feder 16 etwas gespannt. Während sich die Feder am Querstück 24 abstützt, drückt sie gegen den Steg 14 des Bügels bis dessen Anschlag 13 am U-Profil 20 anliegt. Durch die normale Spannung der Feder ergibt sich die Stellung des Planenverschlusses nach Fig. 3 (geschlossene Stellung), bei welcher oben und unten gleich lange Kopfflächen 12a, 12b gegenüber dem Gehäuse vorstehen.

Der funktionsgerechte Planenverschluß nach Fig. 3 wird an einer Bordwand 3 eines Lastkraftwagens angeschraubt, derart, daß der Bügel eine lotrechte Stellung hat.

An der Plane 1, die festgehalten werden soll, sind Blechringe 2 von einer kreisrunden oder ovalen Form eingenietet.

Beim Anbringen eines Blechringes 2 am Planenverschluß wird der obere Teil des Blechringes über das Gehäuse gehängt und die Plane 1 unten angedrückt bis der Blechring auch unten eingeschnappt und um das Gehäuse herumliegt (Stellung 2b). Der Blechring wird dann sowohl oben als auch unten durch die Kopfflächen 12a, 12b des Bügels gehalten. Wenn der Blechring 2 zunächst oben übergehängt ist dann nimmt er eine geneigte Stellung ein, wobei er unten am Bogenstück 11 etwas unterhalb des Scheitels anliegt (Stellung 2a). Beim Herunterdrücken der Plane läuft der Blechring unten auf das Bogenstück auf. Durch eine nach oben gerichtete Kraftkomponente wird dabei der Bügel der Feder entgegen nach oben geschoben, bis in die auf Fig. 4 gezeigte Stellung. In dieser Stellung wird das Bogenstück 11 unten im Ansatz an die Sehne 12 von der Ausnehmung 22 des Gehäuses aufgenommen, so daß die Oberfläche des Bogenstückes 11 ohne Absatz in die Gehäuseoberfläche übergeht.

Beim Öffnen des Planenverschlusses wird die Plane unten angefaßt und der Bügel 10 mit dem Daumen oder mit dem Finger der gleichen Hand nach oben geschoben bis die Stellung nach Fig. 4 erreicht ist und der Blechring abgenommen werden kann.

Entsprechend dem Querstück 24 kann das Gehäuse auch unten durch ein gehäuseseitiges Querstück verschlossen werden, so daß es ringsum gegen Schmutz geschützt ist.

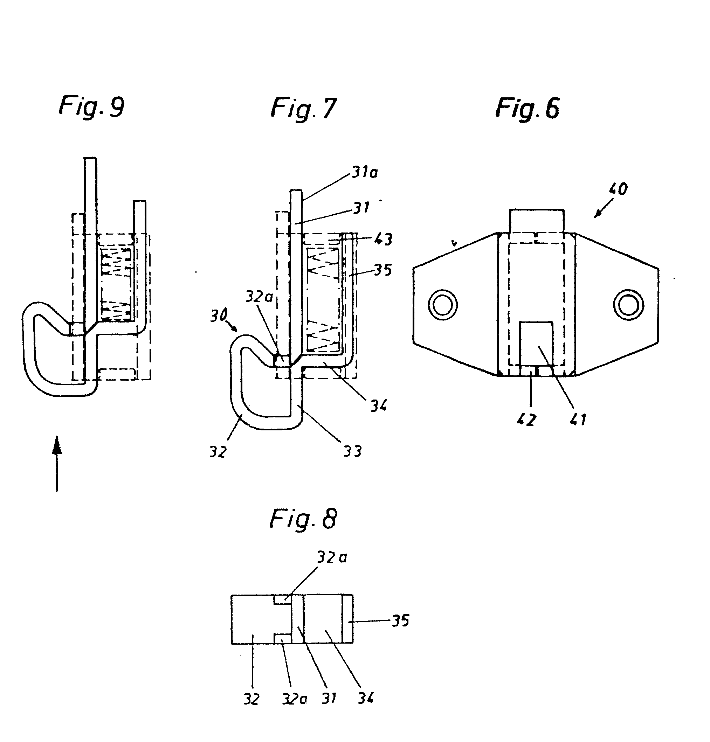

Das Gehäuse 40 bei dem Ausführungsbeispiel nach Fig. 6 bis 9 ist im Prinzip wie das Gehäuse nach Fig. 1 ausgebildet. Es sind zwei Flansche gebildet, die an der Bordwand anliegend angeschraubt werden und dazwischen ein U-Profil geeignet zur Aufnahme eines Bügels. In der Vorderwand des U-Profils ist eine von unten ausgehende rechteckige Ausnehmung 41 gebildet. Der Innenraum des Gehäuses ist unten durch einen Boden 42 und oben durch eine Decke 43 abgeschlossen. Diese Teile werden durch angeformte Laschen gebildet, die nach dem Einsetzen von Bügel und Feder umgebogen werden.

Der Bügel 30 dargestellt in Fig. 7, 8 und 9 ist aus einem einzigen Stückmetallband geformt.

Dabei schließt sich an einen hinteren Steg 35 unten im rechten Winkel ein Quersteg 34 an und daran wiederum rechtwinklig ein unterer Steg 33. Daran schließt sich unten, nach oben gerichtet ein Bogenstück 32 an, etwa über 90°, daran anschließend ein weiteres Bogenstück etwa über 135°, das sich bis zum Scheitel zwischen dem Quersteg 34 und dem unteren Steg 33 erstreckt. An dieser Stelle wird der Bügel durch einen oberen Steg 31 gebildet, der die obere Fortsetzung des unteren Steges 33 darstellt.

Bei dem montierten Planenverschluß sind der hintere Steg 35, der Quersteg 34 und der vordere Steg 31 lotrecht verschiebbar vom U-Profil des Gehäuses aufgenommen. In den Raum zwischen den genannten Stegen ist die Schraubenfeder 16 aufgenommen. Sie ist etwas gespannt, wobei die Gehäusedecke 43 das obere Widerlager der Feder darstellt, während die Feder unten gegen den Quersteg 34 drückt, der am Gehäuseboden 42 anliegt.

Der untere Steg 33 steht unten am Gehäuse vor und bildet dort die Kopffläche zur Verriegelung. An den unteren Steg schließt sich am Gehäuse vorstehend der geschlossene Bogen 32 an.

Die Entriegelung des Planverschlusses erfolgt durch Hochdrücken des Bügels in die auf Fig. 9 gezeigte Stellung. Dabei kann der Bereich des Bogens 32, der am Steg 31 ansetzt, von der Ausnehmung 41 in der Gehäusevorderwand aufgenommen werden.

In diesem Bereich sind am Bügel einander gegenüberliegend zwei Ausnehmungen 32a gebildet, die jeweils einen Begrenzungsrand der Ausnehmung 41 aufnehmen und dort geführt sind.

**Patentansprüche**

1. Planenverschluß für Planen (1) mit eingenieteten Blechringen (Ösen) (2) mit den Merkmalen:
- er weist ein an einer Bordwand (3) anbringbares Gehäuse (20, 40), geeignet zum Überhängen einer Öse auf;
- am Gehäuse ist vorderseitig ein langgestrecktes Schließteil (10, 30) in lotrechter Anordnung angebracht, welches oberhalb und unterhalb des Gehäuses eine Kopffläche (Sperrfläche) (12a, 12b) bildet, die das Abnehmen der Öse verhindern;
- das Schließteil ist in eine Offenstellung (Fig. 4, 9) beweglich, in welcher die untere Kopffläche im wesentlichen aufgehoben ist, gekennzeichnet durch die folgenden Merkmale:

- am Gehäuse (20, 40) ist ein U-Profil gebildet;
- das Schließteil ist ein Bügel (10, 30) mit einem vorderen Steg (12, 31), einem dazu parallelen hinteren Steg (15, 35), verbunden durch einen Quersteg (14, 34), und einem geschlossenen Bogenstück (11, 32), das sich im Bereich des Quersteges an den vorderen Steg anschließt;
- die Stege des Bügels sind verschiebbar vom U-Profil (21) des Gehäuses aufgenommen, wobei zwischen den Stegen eine Schraubenfeder (16) gelagert ist, die mit einem Ende gegen den Quersteg (14) mit dem anderen Ende gegen eine Decke (24) des Gehäuses drückt;
- durch den Federdruck und durch einen Anschlag (13, 42) ist der Bügel in der Verschlußstellung gehalten, wobei die überstehenden Kopfflächen durch den oberen Bereich und den unteren Bereich des vorderen Steges gebildet werden.

2. Planenverschluß nach Anspruch 1, gekennzeichnet durch folgende Merkmale:
- der Bügel (10) hat ein halbkreisförmiges Bogenstück (11) mit einer den vorderen Steg bildenden Sehne (12);
- im einen Scheitelbereich ist ein Anschlag (13) gebildet;
- im anderen Scheitelbereich erstreckt sich von der Sehne (12) aus ein Quersteg (14), der sich in den hinteren Steg (15) fortsetzt.

3. Planenverschluß nach Anspruch 2, dadurch gekennzeichnet, daß in der Vorderwand des U-Profils (21) eine nach unten offene Ausnehmung (22) gebildet ist, die der Breite des Bügels angepaßt ist.

4. Planenverschluß nach Anspruch 1, gekennzeichnet durch einen Bügel (30), der aus einem Metallband geformt ist mit den nachfolgenden Merkmalen:
- an einem Quersteg (34) ist rechtwinklig ein unterer Abschnitt (33) des vorderen Steges angeformt;
- unten an den unteren Abschnitt ist ein Bogen (32) angeformt, der sich bis in den Scheitelbereich zwischen dem unteren Abschnitt (33) und dem Quersteg (34) erstreckt;
- an den Bogen schließt sich nach oben ein oberer Abschnitt des vorderen Steges (31) an;
- in der Gehäusevorderwand ist im Anschluß an einen Boden (42) eine rechteckige Ausnehmung (41) gebildet.

5. Planenverschluß nach Anspruch 4, dadurch gekennzeichnet, daß die lotrechten Begrenzungswände der Ausnehmung (41) der Gehäusevorderwand von zwei am Bogen des Bügels gebildeten Ausnehmungen (32a) aufgenommen werden.

**Claims**

1. A tilt fastening device for tarpaulins with sheet metal eyelets (2) riveted into place, having the features:
- it comprises a housing (20, 40) which can be attached to a side wall (3) and which is suitable for an eyelet to be slipped over;
- at the front side of the housing there is attached an elongated closing element (10, 30) in a vertical arrangement which forms a head face (locking face) (12a, 12b) above and below the housing which prevents the eyelet from being removed;
- the closing element is movable into an open position (Fig. 4, 9) in which the lower head face is substantially retracted,

characterised by the following features:

- at the housing (20, 40) there is formed a U-section;
- the closing element is a stirrup (10, 30) with a front web (12, 31), a rear web (15, 35) parallel thereto, a transverse web (14, 34) connecting the said webs, and a closed curved part (11, 32) which joins the front web in the region of the transverse web;
- the webs of the stirrup are shiftably accommodated by the U-section (21) of the housing, a helical spring (16) being mounted between the webs which presses with one end against the transverse web (14) and with the other end against an upper wall (24) of the housing;
- the stirrup is held in the closing position by the spring pressure and by an abutment (13, 42) the projecting head faces being formed by the upper region and the lower region of the front web.

2. A tilt fastening device as claimed in claim 1, characterised by the following features:
- the stirrup (10) has a semicircular curved part (11) with a chord (12) forming the front web;
- in one vertex region there is formed an abutment (13);
- in the other vertex region there extends from the chord (12) a transverse web (14) which merges into the rear web (15).

3. A tilt fastening device as claimed in claim 2, characterised in that in the front wall of the U-section (21) there is formed a recess (22) which is open towards the bottom and adapted to the width of the stirrup.

4. A tilt fastening device as claimed in claim 1, characterised by a stirrup (30) which is formed out of a metal strip with the following features:
— at a transverse web (34) there is integrally formed at right angles a lower section (33) of the front web;
— at the bottom end of the lower section there is integrally formed an arch (32) which extends up to the vertex region between the lower section (33) and the transverse web (34);
— the arch merges at the top into an upper section of the front web (31);
— in the front wall of the housing there is formed a rectangular recess (41) which follows a bottom (42).

5. A tilt fastening device as claimed in claim 4, characterised in that the vertical boundary walls of the recess (41) of the front wall of the housing are accommodated by two recesses (32a) formed at the arch of the stirrup.

## Revendications

1. Dispositif d'immobilisation pour prélarts (1) à oeillets en tôle (2) emmanchés par rivetage ayant pour caractéristiques:
— il présente un boîtier (20, 40) pouvant se placer sur une paroi de bord (3) et convenant pour la suspension d'un oeillet;
— à l'avant du boîtier est disposée une pièce de fermeture (10, 30) allongée et disposée verticalement, qui présente une surface saillie (surface d'arrêt) (12a. 12b) au-dessus et en-dessous du boîtier, afin d'empêcher le décrochage de l'oeillet;
— la pièce de fermeture peut se déplacer dans une position d'ouverture (fig. 4, 9), dans laquelle la surface en saillie inférieure est essentiellement escamotée,

caractérisé en ce que:

— un profil en U est formé sur le boîtier (20, 40);
— la pièce de fermeture est un étrier (10, 30) avec une barre antérieure (12, 31), une barre postérieure (15, 35) parallèle à la première, toutes deux reliées par une traverse (14, 34) et une pièce courbe fermée (11, 32) qui se raccorde à la barre antérieure dans la région de la traverse;
— les barres de l'étrier peuvent être retirées, par glissement, du profil en U (21) du boîtier, un ressort hélicoïdal (16) étant disposé entre les barres et appuyant par une extrémité sur la traverse (14), et par l'autre extrémité sur le couvercle (24) du boîtier;
— la pression du ressort et une butée (13, 42) maintiennent l'étrier en position de fermeture, les surfaces en saillie étant constituées par la partie supérieure et la partie inférieure de la barre antérieure.

2. Dispositif d'immobilisation pour prélarts selon la revendication 1, caractérisé en ce que:
— l'étrier (10) présente une pièce courbe semi-circulaire (11) dont la corde (12) constitue la barre antérieure;
— une butée (13) est formée près d'un sommet
— une traverse (14) part de la corde (12) près de l'autre sommet, et se prolonge par la barre postérieure (15).

3. Dispositif d'immobilisation pour prélarts selon la revendication 2, caractérisé en ce qu'une cavité (22) ouverte vers le bas est formée dans la paroi antérieure du profil en U (21) et est adaptée à la largeur de l'étrier.

4. Dispositif d'immobilisation pour prélarts selon la revendication 1, caractérisé par un étrier (30) constitué d'une bande métallique et possédant les caractéristiques suivantes:
— sur une traverse (34) est constituée perpendiculairement une section inférieure (33) de la barre antérieure;
— au bout de la section inférieure est formée une partie courbe (32) qui s'étend jusqu'à sa partie supérieure entre la section inférieure (33) et la traverse (34);
— une section supérieure de la barre antérieure (31) se raccorde vers le haut à la partie courbe;
— une cavité rectangulaire (41) est constituée dans la paroi antérieure du boîtier, à la suite d'un fond (42).

5. Dispositif d'immobilisation pour prélarts selon la revendication 4, caractérisé en ce que les parois verticales limitant la cavité (41) de la paroi antérieure du boîtier sont reçues par deux cavités (32a) formées sur la partie courbe de l'étrier.

Fig. 3

Fig. 4

Fig. 5

Fig. 2

Fig. 1

Fig. 9

Fig. 7

Fig. 6

Fig. 8